# EUROPEAN PATENT APPLICATION

(11) **EP 1 744 499 A1**
(43) Date of publication of application: **17.01.2007**
(21) Application number: 05737120.5
(22) Date of filing: 26.04.2005
(51) Int. Cl.: H04L 12/56

(54) **ACCESS NETWORK SYSTEM AND SUBSCRIBER DATA ROUTE CONTROL METHOD**

(30) Priority: 18.05.2004 JP 2004147641
(71) Applicant: MATSUSHITA ELECTRIC INDUSTRIAL CO., LTD., Osaka 571-8501 (JP)
(72) Inventor: KAWAKAMI, Tetsuya., c/o Matsushita El.Ind. Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/007900
(87) International publication number: WO 2005/112370

(57) **Abstract**

There is disclosed an access network system capable of improving throughput even when a single relay device is arranged for different communication routes between an ISP device and a plurality of subscriber terminal devices. In this system, each of the subscribers (111 to 114) and relay stations (105) sets a VLAN so that one VLAN becomes a line. By VLAN-tagging to the packet of the subscriber data, the subscriber data is transferred via the VLAN. The access network system (100) generates MAC address tag information having a destination MAC address indicating the subscriber station which is an edge of the route of the VLAN, a source MAC address indicating the subscriber station corresponding to the route of the VLAN, and a VLAN tag and adds the MAC address tag information to the subscriber data.

## Description

### Technical Field

The present invention relates to an access network system that controls subscriber data paths, and a subscriber data path control method.

### Background Art

Generally, in an IP network system, an IP router controls a path of data to be transferred. The IP router determines a next-stage IP router to relay an IP packet by a destination IP address of the IP packet. In an access network system where subscriber terminal apparatuses are connected to an ISP (Internet Service Provider) apparatus, there is a case where a packet transmitted from the subscriber terminal apparatus indicates, as a destination IP address, for example, an IP address of a host of the same portal site.

However, each subscriber terminal apparatus contracts with each ISP apparatus, and a packet (subscriber data) of the subscriber terminal apparatus needs to be passed through the contracted ISP network. Therefore, the packet from the subscriber terminal apparatus needs to be transmitted to the ISP apparatus to which the subscriber terminal apparatus belongs, regardless of the destination IP address.

Thus, the packet of the subscriber terminal apparatus is transferred to the ISP network by being tunneled into private IP network in the access network system. Then, the packet of the subscriber terminal apparatus is capsuled with a private IP indicating an IP of a router with which the ISP apparatus is connected, and thereby, transmitted to the ISP apparatus via the IP router in the access network system.

However, as described above, with a method of performing IP capsulation, it is necessary to perform IP capsulation on all the subscriber data to be transferred, and therefore the processing load increases on the apparatus that holds subscriber data, and high-speed software processing is required.

Further, when a defect occurs on the path, path change processing arises so as to bypass the defective path. With the method of performing IP capsulation, a subscriber data path complies with IP routing in the access network system, and therefore, in switching the path when a defect occurs, it is required to wait for convergence of a new path by path control protocol. The path switching requires several tens of seconds.

Therefore, an access network system is proposed which enables high-speed path control (see Patent Document 1). In the access network system, a plurality of subscriber stations and a plurality of relay stations set a VLAN (Virtual LAN) so that a single VLAN becomes a line on the transfer plane using a layer lower than layer 3 in an OSI model. By performing corresponding VLAN tagging on a transfer packet, the subscriber data that the subscriber terminal apparatus transmits and receives is transferred via the VLAN, and a network managing block changes setting of the VLAN according to traffic information collected from a plurality of subscriber stations and a plurality of relay stations on the control plane using layer 3.
Patent Document 1: Japanese Patent Application Laid-Open No.2003-338836

### Disclosure of Invention

### Problems to be Solved by the Invention

However, there are following problems in the access network system as described in Patent Document 1.

The access network system as described in Patent Document 1 is network of layer 2 using Ethernet (Trademark), and a relay apparatus that transfers a packet (frame) determines an output port according to a destination MAC address in the frame. The relationship between the MAC address and port is held (learned) by the relay apparatus with a source MAC address of the received packet in association with a reception port.

Therefore, when a frame of the packet to subscriber terminal apparatus 1 becomes a state as shown in FIG.1, and a frame of the packet to subscriber terminal apparatus 2 becomes a state as shown in FIG.2, as shown in FIG.3, different two ports (port 1 and port 2) of the relay apparatus try to learn the source MAC address (ISP#A) outputted from the same ISP apparatus.

At this point, the same MAC address is not learned by a plurality of ports, and a normal layer 2 switch regards the subscriber terminal apparatus as moving, and holds the MAC address only on the side of the newly learned port.

In other words, the address is learned only by one port, and, when subscriber terminal apparatuses 1 and 2 simultaneously perform communication, the packets from the subscriber terminal apparatuses to the ISP apparatus are only learned on the VLAN of one of the subscriber terminal apparatuses. At this point, the subscriber terminal apparatus using the VLAN that is not learned performs flooding processing, and therefore transfer throughput of the packet decreases extremely.

Further, in the access network system as described in Patent Document 1, when subscriber terminal apparatuses 1 and 2 simultaneously perform communication, processing of changing address learning is performed whenever the packet is passed through, which results in a cause of decreasing the throughput.

It is therefore an object of the present invention to provide an access network system and subscriber data path control method that realizes improvement of throughput even when a single relay apparatus exists on different communication paths between an ISP apparatus and a plurality of subscriber terminal apparatuses.

### Means for Solving the Problem

An access network system according to the present invention adopts a configuration having: an edge apparatus that is connected to outside of network and adds a source MAC address corresponding to a final destination inside the network to a packet received from the outside of the network; and a relay apparatus that associates the source MAC address of the packet received from the edge apparatus with a port receiving the packet to hold, and transfers the received packet.

According to this configuration, the relay apparatus holds MAC addresses corresponding to different ports in the ports, and, when simultaneously communicating with different subscriber terminal apparatuses, the relay apparatus is capable of avoiding flooding due to unlearning of an address of one of the apparatuses, so that throughput can be improved.

### Advantageous Effect of the Invention

According to the present invention, even when a single relay apparatus exists on different communication paths between an ISP apparatus and a plurality of subscriber terminal apparatuses, it is possible to improve throughput.

### Brief Description of Drawings

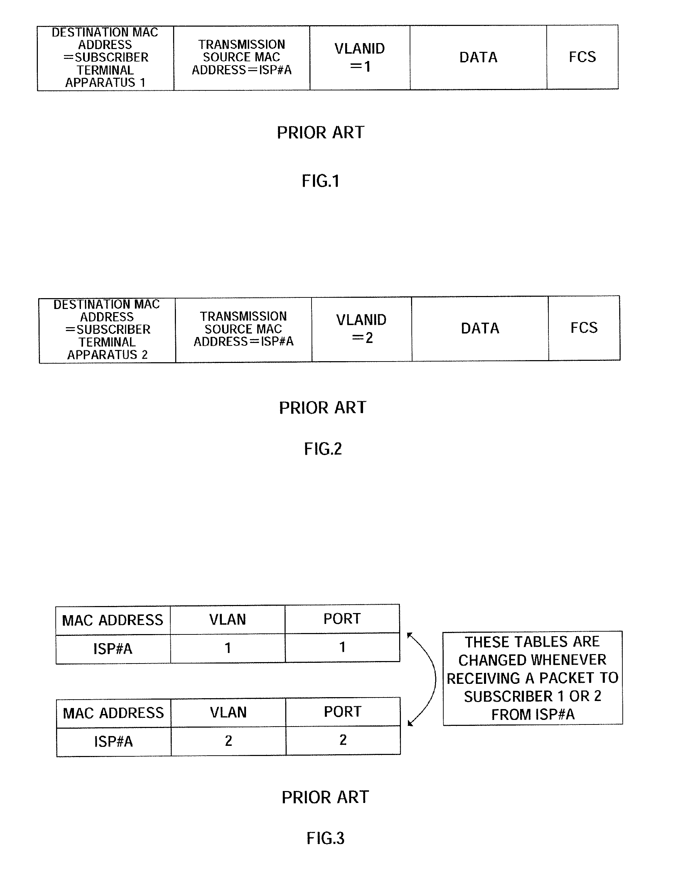

FIG.1 illustrates a frame of a packet to subscriber terminal apparatus 1 in a conventional access network system;
FIG.2 illustrates a frame of a packet to subscriber terminal apparatus 2 in the conventional access network system;
FIG.3 shows address learning tables of a relay station in the conventional access network system;

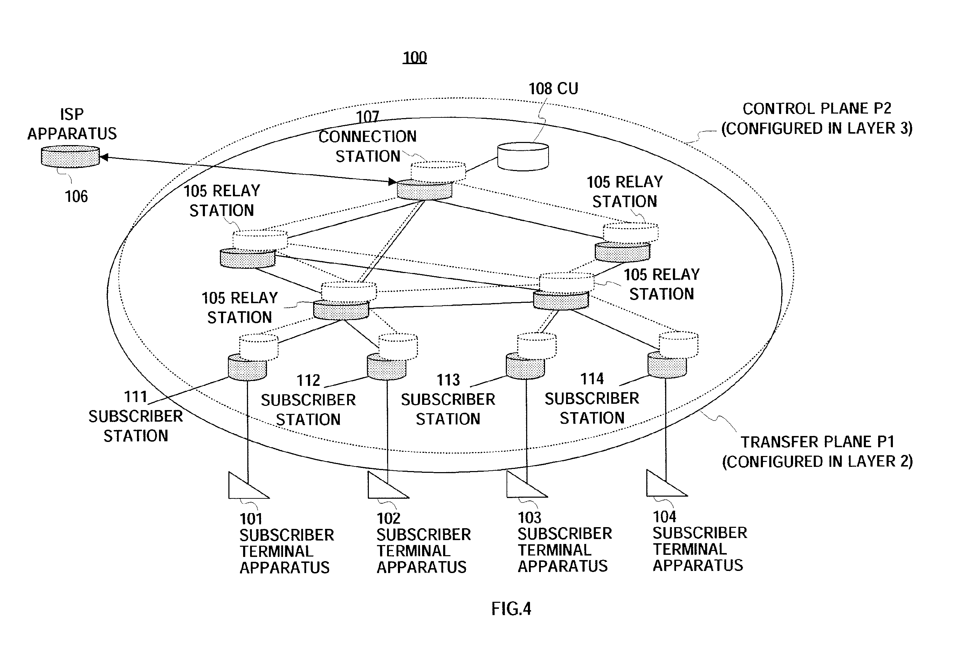

FIG.4 illustrates a configuration of an access network system according to one embodiment of the present invention;
FIG.5 explains a protocol stack on a transfer plane of the access network system according to one embodiment of the present invention;

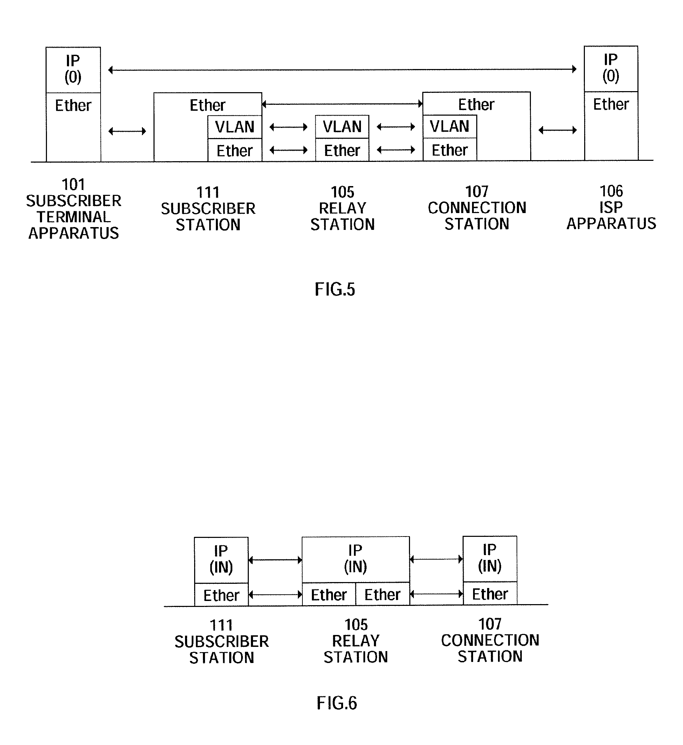

FIG.6 explains a protocol stack on a control plane of the access network system according to one embodiment of the present invention;

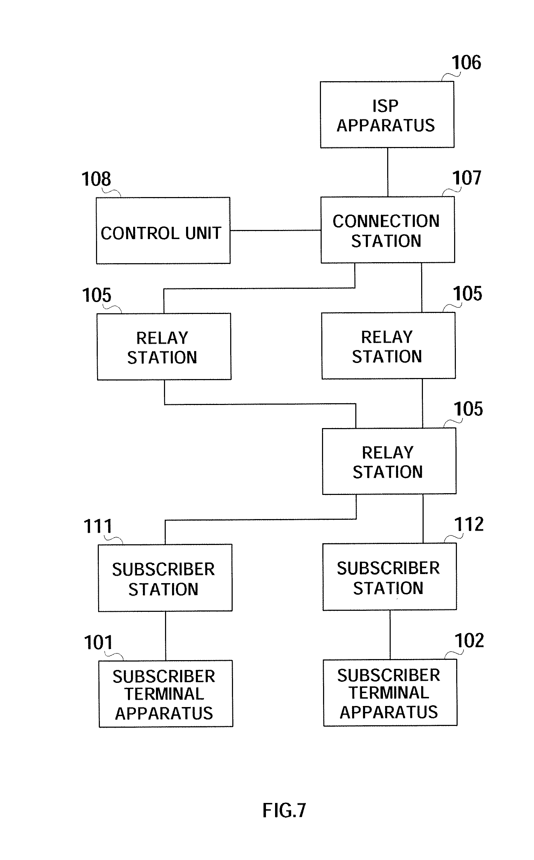

FIG.7 is a block diagram illustrating part of the access network system according to one embodiment of the present invention;

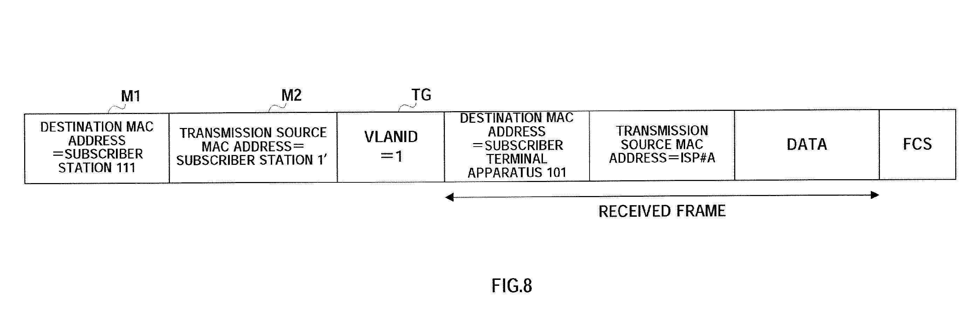

FIG.8 illustrates a frame format when a connection station performs capsulation on a packet transmitted to one subscriber terminal apparatus from an ISP apparatus according to one embodiment of the present invention;

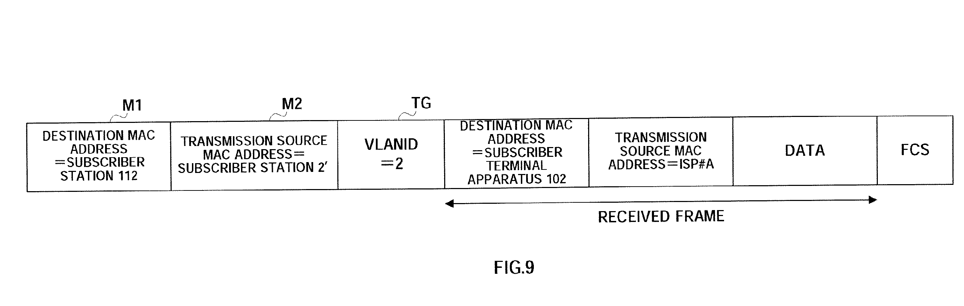

FIG.9 illustrates a frame format when the connection station performs capsulation on a packet transmitted to another subscriber terminal apparatus from the ISP apparatus according to one embodiment of the present invention;

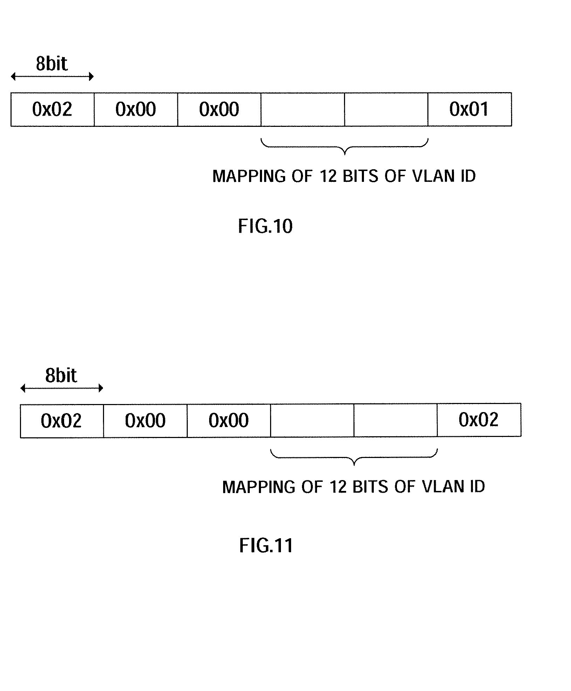

FIG.10 illustrates a format of a MAC address newly added to a packet in the connection station according to one embodiment of the present invention;

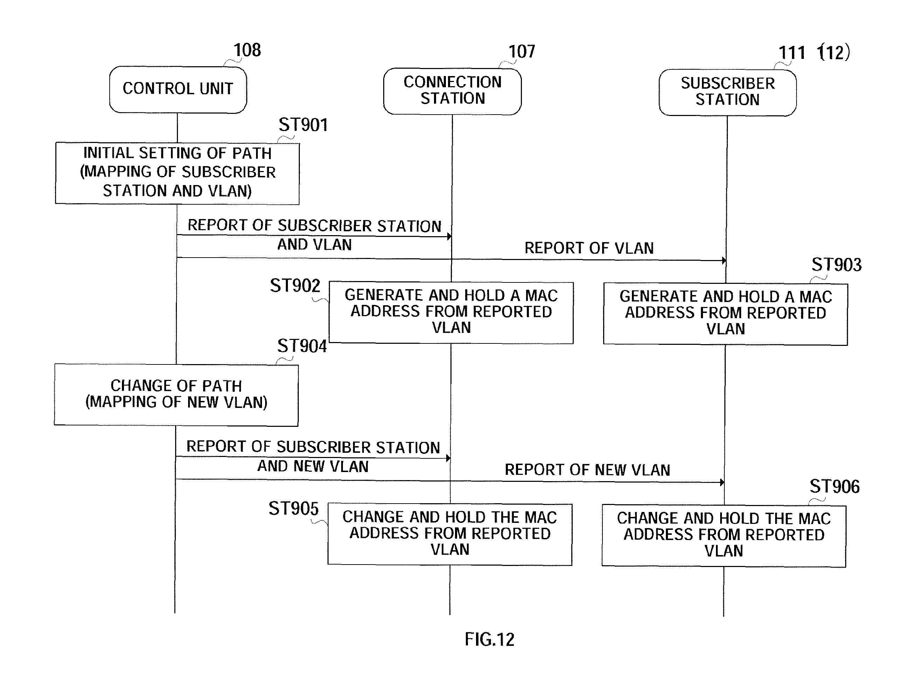

FIG.11 illustrates a format of a MAC address newly added to a packet in the subscriber station according to one embodiment of the present invention;
FIG.12 is a sequence diagram to explain generation, setting and change of the MAC address in a control unit, connection station and subscriber station according to one embodiment of the present invention;

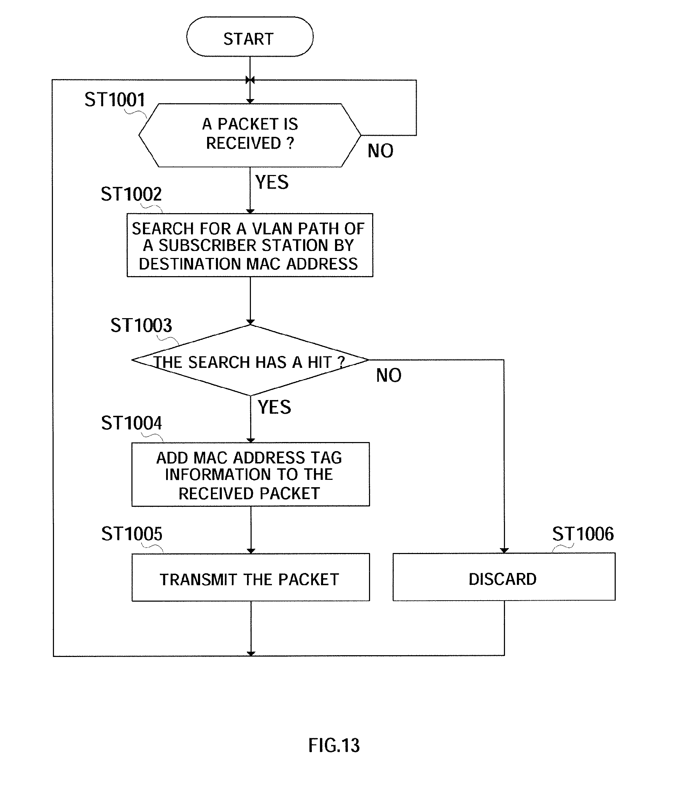

FIG.13 is a flow diagram illustrating procedures of transfer processing when the connection station receives a packet from the ISP apparatus according to one embodiment of the present invention; and

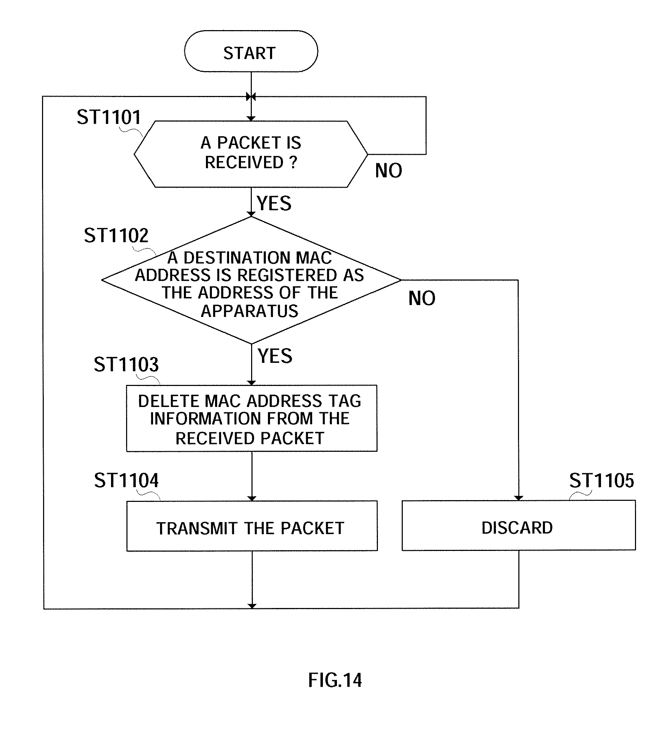

FIG.14 is a flow diagram illustrating procedures of transfer processing when the connection station receives a packet from a relay station according to one embodiment of the present invention.

### Best Mode for Carrying Out the Invention

An embodiment of the present invention will be described below in detail with reference to the accompanying drawings.

### (Embodiment)

FIG.4 illustrates a configuration of an access network system according to one embodiment of the present invention. As shown in FIG.4, access network system 100 according to one embodiment of the present invention has: a plurality of subscriber terminal apparatuses 101 to 104; a plurality of relay stations 105; a plurality of subscriber stations 111 to 114 that connect the plurality of subscriber terminal apparatuses 101 to 104 to the plurality of relay stations 105; a plurality of connection stations 107 that connect the plurality of relay stations 105 to ISP apparatus 106; and control unit (CU) 108.

Access network system 100 has: transfer plane P1 configured in layer 2; and control plane 2 configured in layer 3. FIG.5 shows a protocol stack of transfer plane P1. FIG.6 shows a protocol stack of control plane P2.

In access network system 100, the VLAN is set so that the plurality of subscriber stations 111 to 114 and the plurality of relay stations 105 become a single line on transfer plane P1, VLAN tagging is performed on a packet of subscriber data, and the subscriber data is transferred via the VLAN.

Further, in access network system 100, control unit 108 collects the overall traffic information from the plurality of relay stations 105 and the plurality of subscriber stations 111 to 114, on the control plane P2, and based on the collected overall traffic information, controls paths of subscriber data that the plurality of subscriber terminal apparatuses 101 to 104 receive and transmit.

FIG.7 is a block diagram illustrating part of access network system 100. As shown in FIG.7, access network system 100 is assumed to have: two subscriber terminal apparatuses 101 and 102, three relay stations 105; two subscriber stations 111 and 112; single connection station 107 that connects relay stations 105 to ISP apparatus 106; and control unit 108.

FIG.8 illustrates a frame format in which connection station 107 performs capsulation on a packet transmitted to subscriber terminal apparatus 101 from ISP apparatus 106.

FIG.9 illustrates a frame format in which connection station 107 performs capsulation on a packet transmitted to subscriber terminal apparatus 102 from ISP apparatus 106.

As shown in FIGs.8 and 9, a header (MAC address tag information) of Ethernet (Trademark) used in capsulation by connection station 107 has: destination MAC address M1 that indicates a subscriber station that is an edge of a path of the VLAN; source MAC address M2 that indicates a subscriber station corresponding to the path of the VLAN; and VLAN tag TG. In other words, instead of inserting a VLAN tag in a received packet (received frame), connection station 107 adds MAC address tag information.

By performing capsulation with a new Ethernet (Trademark) header, source MAC addresses are not the same in the packet to subscriber terminal apparatus 101 and the packet to subscriber terminal apparatus 102, and vary depending on destinations. Therefore, in relay station 105, different ports learn respective MAC addresses corresponding to the ports. By this means, the processing of changing a learning table is not performed whenever packets to subscriber terminal apparatuses 101 and 102 are passed through relay station 105. Then, the corresponding address is used in each port, so that, when subscriber terminal apparatuses 101 and 102 simultaneously perform communication, it is possible to prevent flooding due to unlearning of an address of one of the apparatuses. It is thereby possible to improve throughput.

FIG.10 illustrates a format of the MAC address newly added to a packet in connection station 107. FIG. 11 illustrates a format of the MAC address newly added to the packet in subscriber stations 111 and 112.

The MAC address is made up of 48 bits. First 8 bits are made 0x02 among 48 bits of the MAC address, and thereby used as private MAC address space. Further, 12 bits of a value of VLAN ID currently used by subscriber stations 111 and 112 are mapped on the MAC address.

The path of individual subscriber data is distinguished by VLAN. The path of the VLAN and a pair of destination and source address of newly added MAC addresses used in the access network are subjected to one-to-one mapping, and thereby it is only necessary to manage the value of the VLAN. Further, also when a plurality of subscriber terminal apparatuses are connected to a single subscriber station and perform communication using different VLANs, destination and source MAC addresses can be distinguished for each path, so that it is possible to improve throughput.

Next, generation, setting and change of the MAC address in control unit 108, connection station 107 and subscriber station 111 (112) will be described in detail with reference to FIG.12.

Upon start up of access network system 100, control unit 108 calculates a VLAN path for connecting subscriber stations 111 and 112 and connection station 107, and generates an initial set value of the path (step ST901). Then, using control plane P2, control unit 108 reports the initial set value of the path to subscriber station 111 (112) and connection station 107.

Connection station 107 and subscriber station 111 (112) generate and hold their MAC addresses corresponding to the VLAN of the reported initial set value (steps ST902 and ST903). In addition, since a plurality of VLANS are converged, connection station 107 generates and holds a plurality of MAC addresses.

Then, when a VLAN path of a given subscriber terminal apparatus is changed due to a change of the path (upon change of the path), control unit 108 changes the path (step ST904), and reports a change of the VLAN to subscriber station 111 (112) and connection station 107.

According to the report of the change of the VLAN from control unit 108, connection station 107 and subscriber station 111 (112) change the VLAN to be mapped on the plurality of subscriber terminal apparatuses 101 and 102, and change and hold their MAC addresses (steps ST905 and ST906).

Packet transfer processing of connection station 107 will be described below in detail with reference to the drawings. FIG.13 is a flow diagram illustrating procedures of transfer processing when connection station 107 receives a packet from ISP apparatus 106. As shown in FIG.13, when receiving a packet (step ST1001), connection station 107 specifies a subscriber station by a destination MAC address, and searches for a VLAN path set by control unit 108 (step ST1002). Next, in step ST1003, connection station 107 judges whether or not the search has a hit.

When the search has a hit in step ST1003, connection station 107 adds (capsules) MAC address tag information (Ethernet (Trademark) header) to a received packet using the corresponding VLAN ID to transmit (steps ST1004 and ST1005), and the processing returns to step ST1001. When the search does not have a hit in step ST1003, connection station 107 discards the received packet (step ST1006), and the processing returns to step ST1001.

FIG.14 is a flow diagram to explain transfer processing when connection station 107 receives a packet from relay station 105. As shown in FIG.14, when receiving a packet (step ST1101), connection station 107 judges whether or not a destination MAC address is registered as an address of connection station 107 (step ST1102).

When the destination MAC address is registered as the address of connection station 107 in step ST1102, connection station 107 deletes the MAC address tag information from the received packet, and transmits the packet (steps ST1103 and ST1104), and the processing returns to step ST1101. When the destination MAC address is not registered as the address of connection station 107 in step ST1102, connection station 107 discards the received packet (step ST1105), and the processing returns to step ST1001.

Thus, according to this embodiment, the connection station connected to the ISP apparatus adds a source address varying depending on the destination to a packet received from the ISP apparatus. Therefore, even when a single relay apparatus exists on different communication paths between the ISP apparatus and a plurality of subscriber terminal apparatuses, the relay apparatus learns MAC addresses corresponding to different ports in the ports, so that it is possible to improve throughput.

In addition, in the above-described embodiment, a case has been described as an example where the present invention is configured with hardware, but the present invention can be implemented with software.

Furthermore, each function block used to explain the above-described embodiment is typically implemented as an LSI constituted by an integrated circuit. These may be individual chips or may partially or totally contained on a single chip. Furthermore, here, each function block is described as an LSI, but this may also be referred to as "IC", "system LSI", "super LSI", "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor in which connections and settings of circuit cells within an LSI can be reconfigured is also possible.

Further, if integrated circuit technology comes out to replace LSI's as a result of the development of semiconductor technology or a derivative other technology, it is naturally also possible to carry out function block integration using this technology. Application in biotechnology is also possible.

A first aspect of the present invention is an access network system having: an edge apparatus that is connected to outside of network and adds a source MAC address corresponding to a final destination inside the network to a packet received from the outside of the network; and a relay apparatus that associates the source MAC address of the packet received from the edge apparatus with a port receiving the packet to hold, and transfers the received packet.

According to this configuration, the relay apparatus holds MAC addresses corresponding to different ports in the ports, and, when simultaneously communicating with different subscriber terminal apparatuses, the relay apparatus is capable of avoiding flooding due to unlearning of an address of one of the apparatuses, so that throughput can be improved.

A second aspect of the present invention is an access network system according to the above-described aspect, wherein the edge apparatus associates the source MAC address to be added to the received packet with VLAN ID indicating a path of the received packet to add to the received packet.

According to this configuration, even when a final destination in the network is the same, it is possible to use a plurality of different VLAN paths.

A third aspect of the present invention is an access network system according to the above-described aspects, further having a control unit that manages VLAN paths inside the network, and when changing a VLAN path, reports the changed VLAN path to the edge apparatus, wherein the edge apparatus changes a MAC address of the edge apparatus based on the VLAN path reported from the control unit.

According to this configuration, when the VLAN path is changed, it is also possible to add the MAC address corresponding to the changed VLAN to the received packet.

A fourth aspect of the present invention is an access network system according to the above-described aspects, wherein the relay apparatus is a layer 2 switch corresponding to a plurality of VLANs.

According to this configuration, it is possible to use an existing layer 2 switch as the relay apparatus, and suppress the cost of installing the relay apparatus.

A fifth aspect of the present invention is an edge apparatus that is connected to outside of network and adds a source MAC address corresponding to a final destination inside the network to a packet received from the outside of the network.

According to this configuration, the relay apparatus holds MAC addresses corresponding to different ports in the ports, and, when simultaneously communicating with different subscriber terminal apparatuses, the relay apparatus is capable of avoiding flooding due to unlearning of an address of one of the apparatuses, so that throughput can be improved.

A sixth aspect of the present invention is a subscriber data path control method having: an adding step of adding, in an edge apparatus connected to outside of network, a source MAC address corresponding to a final destination inside the network to a packet received from the outside of the network; and a transfer step of associating, in a relay apparatus receiving the packet from the edge apparatus, the source MAC address of the received packet with a port receiving the packet to hold, and transferring the received packet.

According to this method, the relay apparatus holds MAC addresses corresponding to different ports in the ports, and, when simultaneously communicating with different subscriber terminal apparatuses, the relay apparatus is capable of avoiding flooding due to unlearning of an address of one of the apparatuses, so that throughput can be improved.

The present application is based on Japanese Patent Application No.2004-147641 filed on May 18, 2004, entire content of which is expressly incorporated by reference herein.

### Industrial Applicability

The present invention is capable of improving throughput, and useful in an access network system and a subscriber data path control method.

## Claims

1. An access network system comprising:
an edge apparatus that is connected to outside of network and adds a source MAC address corresponding to a final destination inside the network to a packet received from the outside of the network; and
a relay apparatus that associates the source MAC address of the packet received from the edge apparatus with a port receiving the packet to hold, and transfers the received packet.

2. The access network system according to claim 1,
wherein the edge apparatus associates the source MAC address to be added to the received packet with VLAN ID indicating a path of the received packet to add to the received packet.

3. The access network system according to claim 1, further comprising:
a control unit that manages a VLAN path inside the network, and, when changing the VLAN path, reports the changed VLAN path to the edge apparatus,
wherein the edge apparatus changes a MAC address of the edge apparatus based on the VLAN path reported from the control unit.

4. The access network system according to claim 1,
wherein the relay apparatus is a layer 2 switch corresponding to a plurality of VLANs.

5. An edge apparatus that is connected to outside of network and adds a source MAC address corresponding to a final destination inside the network to a packet received from the outside of the network.

6. A subscriber data path control method comprising:
an adding step of adding, in an edge apparatus connected to outside of network, a source MAC address corresponding to a final destination inside the network to a packet received from the outside of the network; and
a transfer step of associating, in a relay apparatus receiving the packet from the edge apparatus, the source MAC address of the received packet with a port receiving the packet to hold, and transferring the received packet.

## Amended claims

### Amended claims under Art. 19.1 PCT

**1.** (Amended) An access network system comprising;
a plurality of edge apparatuses that are provided inside predetermined network and connect outside of the network and inside of the network; and
a relay apparatus that is provided inside the network and transfers a received packet, wherein:
when a first edge apparatus receives a packet from the outside of the network, the first edge apparatus generates a source MAC address different for each VLAN path configured between a second edge apparatus that transmits the packet to the outside of the network and the first edge apparatus, and adds an additional header generated using the generated source MAC address, a destination MAC address that the second edge apparatus has, and VLAN ID set for the each VLAN path to the packet received from the outside of the network to transmit to the inside of the network; and
the second edge apparatus deletes the additional header from the packet transmitted from the first edge apparatus, and transmits the packet from which the additional header is deleted to the outside of the network.

**2.** (Amended) The access network system according to claim 1, further comprising:
a control unit that manages the VLAN path inside the network, and, when changing the VLAN path, reports VLAN ID of the changed VLAN path to the plurality of edge apparatuses,
wherein the plurality of edge apparatuses change the additional header based on VLAN ID of the changed VLAN path reported from the control unit.

**3.** (Amended) The access network system according to claim 1, wherein the relay apparatus is a layer 2 switch corresponding to a plurality of VLANs.

**4.** (Amended) An edge apparatus that is provided inside predetermined network and connects outside of the network and inside of the network, the edge apparatus comprising:
a receiver that receives a packet from the outside of the network;
a source MAC address generator that generates a sourceMAC address different for eachVLANpath configured between another edge apparatus that transmits the packet received in the receiver to the outside of the network and the first edge apparatus;
an additional header generator that generates an additional header using a destination MAC address that the another edge apparatus has, the source MAC address, and VLAN ID set for the each VLAN path; and
an additional header adder that adds the additional header to the packet received in the receiver.

**5.** (Amended) An edge apparatus that is provided inside predetermined network and connects outside of the network and inside of the network, the edge apparatus comprising:
a receiver that receives a packet from the inside of the network; and
an additional header deleter that deletes from the packet received in the receiver an additional header generated in another edge apparatus using a MAC address that the edge apparatus has, a source MAC address generated in the another edge apparatus so as to be different for each VLAN path configured between the another edge apparatus and the edge apparatus, the another edge apparatus transmitting a received packet received from the outside of the network to the inside of the network, and VLAN ID set for the each VLAN path.

**6.** (Amended) A data path control method in an access network system comprising:
a plurality of edge apparatuses that are provided inside predetermined network and connect outside of the network and inside of the network; and
a relay apparatus that is provided inside the network and transfers a received packet, the data path control method comprising:
a receiving step of receiving, in a first edge apparatus, a packet from the outside of the network;
a source MAC address generating step of generating, in the first edge apparatus, a source MAC address different for each VLAN path configured between a second edge apparatus that transmits the packet received in the receiving step to the outside of the network and the first edge apparatus;
an additional header generating step of generating, in the first edge apparatus, an additional header using a destination MAC address that the second edge apparatus has, the source MAC address, and VLAN ID set for the each VLAN path;
an additional header adding step of adding, in the first edge apparatus, the additional header to the packet received in the receiving step; and
an inside-network transmitting step of transmitting the packet to which the additional header is added, from the first edge apparatus to the inside of the network;
an additional header deleting step of deleting, in the second edge apparatus, the additional header from the packet to which the additional header is added in the first edge apparatus; and
an outside-network transmitting step of transmitting the packet from which the additional header is deleted, from the second edge apparatus to the outside of the network.
